# EUROPEAN PATENT APPLICATION

(11) **EP 4 778 857 A1**
(43) Date of publication of application: **22.07.2026**
(21) Application number: 24865455.0
(22) Date of filing: 10.09.2024
(51) Int. Cl.: B65G 1/04

(54) **WAREHOUSE SYSTEM**

(30) Priority: 12.09.2023 US 202363581993 P
(71) Applicant: Rapyuta Robotics Co., Ltd., Tokyo 135-0023 (JP)
(72) Inventor: MOHANARAJAH, Gajamohan, Tokyo 135-0023 (JP); ARUDCHELVAN, Krishnamoorthy, Tokyo 135-0023 (JP); CHAPELLE, Jean-Noel, Tokyo 135-0023 (JP)
(74) Representative: FRKelly
(86) International application number: PCT/JP2024/032437
(87) International publication number: WO 2025/057955

(57) **Abstract**

A warehouse system (2) includes a rack (20) formed by coupling a plurality of rack units (22) to one another, the plurality of rack units each defining a space in which a pallet (24) for placement of an item (23) is to be placed. A plurality of floors (21) are formed by the plurality of rack units (22), the plurality of floors each defining a surface (24) on which a transport robot (25) is movable, the transport robot transporting the pallet (24) between the plurality of rack units (22).

## Description

### TECHNICAL FIELD

The present invention relates to a warehouse system.

### BACKGROUND

For example, Patent Literature 1 discloses a warehouse. An accommodating shelf is disposed in the warehouse, and trays storing articles are arranged in the accommodating shelf. The accommodating shelf includes shelf boards at a plurality of levels. The plurality of shelf boards are supported by a plurality of longitudinal members arranged, for example, at a predetermined interval. The longitudinal members have, for example, the same length as the accommodating shelf, which makes it difficult to construct the accommodating shelf.

Patent Literature 1: International Publication No. WO 2018/189110

An object of the present invention is to provide a warehouse system capable of facilitating the construction of a rack.

### SUMMARY

A warehouse system according to an aspect of the present invention includes a rack formed by coupling a plurality of rack units to one another, the plurality of rack units each defining a space in which a pallet for placement of an item is to be placed, in which a plurality of floors are formed by the plurality of rack units, the plurality of floors each defining a surface on which a transport robot is movable, the transport robot transporting the pallet between the plurality of rack units.

The plurality of rack units are configured to be coupled to one another in a horizontal direction and/or a vertical direction.

Two of the rack units adjacent to each other in a horizontal direction are directly coupled or coupled via a coupling member.

Each of the rack units includes a support leg that lifts and supports the pallet above the surface.

The support leg is configured to be removable.

The robot transports the pallet while lifting the pallet from below the pallet.

The pallet is loadable into each of the rack units from an outer periphery of the rack or unloadable out of the rack unit from the outer periphery of the rack.

The warehouse system further includes a forklift that loads or unloads the pallet.

The forklift recognizes the rack units by pose estimation.

The warehouse system further includes a transport mechanism that transports the pallet between the plurality of floors.

The warehouse system is communicably connected to another warehouse system that performs picking of the item.

### BRIEF DESCRIPTION OF THE DRAWINGS

Fig. 1 is a perspective view schematically illustrating an automated warehouse system 1 used in combination with a warehouse system of the present invention.
Fig. 2 is a perspective view schematically illustrating a structure of a warehouse system 2 according to an embodiment of the present invention.
Fig. 3 is a perspective view schematically illustrating a structure of a rack unit 22 according to a specific example.
Fig. 4 is a front view schematically illustrating the structure of the rack unit 22 according to a specific example.
Fig. 5 is a perspective view schematically illustrating a pallet 24 being placed in the rack unit 22 according to a specific example.
Fig. 6 is a perspective view schematically illustrating a transport robot 25 being placed in the rack unit 22 according to a specific example.
Fig. 7 is an enlarged view of a portion of a rack 20, schematically illustrating a structure of the rack 20.
Fig. 8 is a perspective view schematically illustrating a structure of a coupling member 50 according to a specific example.
Fig. 9 is an enlarged view of a portion of a rack 20A according to a modification example, schematically illustrating a structure of the rack 20A.
Fig. 10 is an enlarged view of a portion of a rack 20B according to another modification example, schematically illustrating a structure of the rack 20B.
Fig. 11A is a diagram for explaining processing in a 3D calculation step.
Fig. 11B is a diagram for explaining the processing in the 3D calculation step.
Fig. 11C is a diagram for explaining the processing in the 3D calculation step.
Fig. 11D is a diagram for explaining the processing in the 3D calculation step.
Fig. 11E is a diagram for explaining the processing in the 3D calculation step.
Fig. 11F is a diagram for explaining the processing in the 3D calculation step.
Fig. 11G is a diagram for explaining the processing in the 3D calculation step.
Fig. 12 is an enlarged perspective view schematically illustrating a support leg 36 according to a modification example.
Fig. 13 is an enlarged perspective view schematically illustrating a support leg 36A according to another modification example.
Fig. 14 is an enlarged perspective view schematically illustrating a support leg 36B according to still another modification example.

### DETAILED DESCRIPTION OF THE EMBODIMENTS

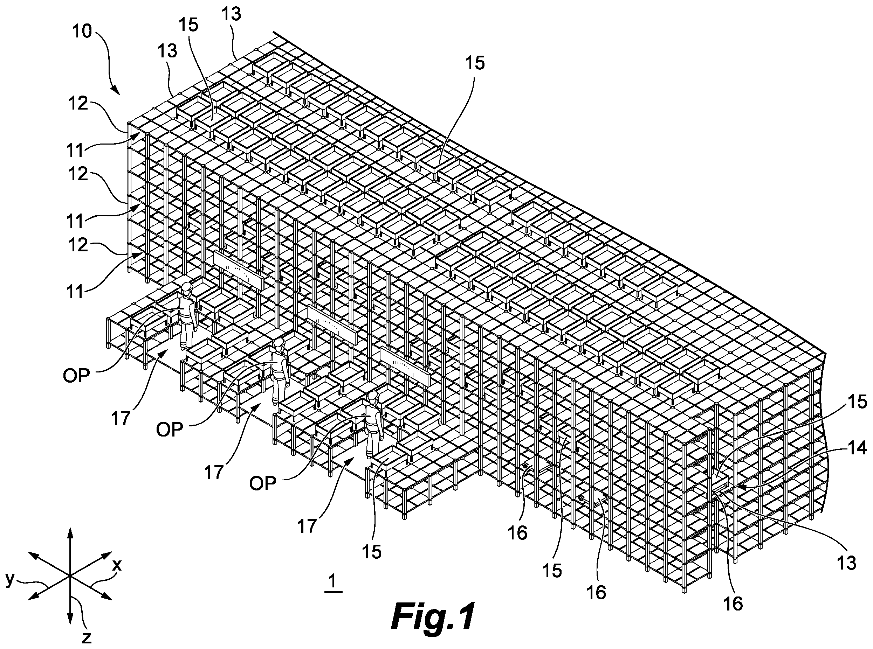

Description will be made below on an embodiment of the present invention with reference to the attached drawings. Fig. 1 is a perspective view schematically illustrating an automated warehouse system 1 used in combination with a later-described warehouse system of the present invention. The automated warehouse system 1 is an automated warehouse system capable of automating a series of operations, from receiving of items, including products and the like, in a warehouse to storing and retrieval thereof, on the basis on centralized management. The automated warehouse system 1 is constructed, for example, on a floor surface inside a building (not illustrated). It should be noted that an x-axis direction, a y-axis direction, and a z-axis direction are defined in the automated warehouse system 1. The x-axis direction and the y-axis direction extend in horizontal directions to be perpendicular to each other, and the z-axis direction extends in a vertical direction to be perpendicular to the x-axis direction and the y-axis direction. The z-axis direction is a height direction.

The automated warehouse system 1 includes, for example, a rack 10 disposed on the floor surface. The rack 10 includes a plurality of floors 11 and a plurality of support columns 12 supporting the respective floors 11. The plurality of floors 11 each define a surface along an xy-plane and are stacked in the z-axis direction. Each of the floors 11 includes a plurality of floor panels 13 arranged adjacent to one another in the x-axis direction and the y-axis direction. The floor panels 13 are made of, for example, a resin material. The plurality of floor panels 13 adjacent to one another in the x-axis direction and the y-axis direction have surfaces that are flush with one another. The plurality of floor panels 13 define a flat surface of each of the floors 11.

The rack 10 includes one or more transport elevators 14 occupying a single section of the floor 11. The transport elevator 14 is movable between the floors 11 in the z-axis direction. The transport elevator 14 includes one floor panel 13 and a drive mechanism (not illustrated) disposed beneath the floor panel 13. The drive mechanism serves to move the floor panel 13 upward and downward in the z-axis direction along elevator shafts at the four corners. The transport elevator 14 may be disposed, for example, at an inner section of the rack 10 and the rack 10 may be provided with a plurality of transport elevators 14. Moreover, a transport elevator 14 that moves only between a part of the floors 11 may be disposed.

One or more storage bins 15 for storing items are placed on the floors 11 of the rack 10. An accommodating space of the storage bin 15 accommodates one or more types of items. The types of items are identified, for example, by unique stock keeping units (SKUs) assigned to the items. Moreover, each storage bin 15 is identified by a unique ID assigned to the storage bin 15. For each storage bin 15, the unique ID is managed in association with the SKU of the item. One storage bin 15 occupies one floor panel 13, that is, one section. A contour of the storage bin 15 in plan view is disposed inside a contour of the floor panel 13 also in plan view.

The automated warehouse system 1 includes one or more transport robots 16 for transporting the storage bin 15. Each transport robot 16 has, in plan view, a contour smaller than the contour of one floor panel 13. The transport robot 16 is an autonomous transport robot capable of autonomously traveling inside the rack 10 by understanding a self-location on a map of the rack 10. The transport robot 16 has an outline, for example, in a flat cubic shape. An upper surface of the transport robot 16 is defined as being, for example, flat. The transport robot 16 is able to lift the storage bin 15 above the floor 11 on the upper surface thereof and then travel on the floor panels 13. The transport robot 16 is able to ride on the transport elevator 14.

The automated warehouse system 1 includes one or more picking stations 17 for sorting the items stored in the storage bins 15. The picking station 17 is formed integrally with the floors 11. The transport robot 16 transports the storage bins 15 placed on the floors 11 of the rack 10 to the picking station 17. At the picking station 17, an operator OP performs picking to take a desired item out of the storage bin 15 and put it in a shipping bin 15 for accommodating an item for shipment. The shipping bin 15 has the same configuration as the storage bin 15. The picking station 17 has a working space for the operator OP to perform picking. The picking station 17 defines a surface continuous with, for example, the surface of a surface of the floor 11 on the second level.

The automated warehouse system 1 includes a management server (a control system, not illustrated) that manages, for receiving, storing, and retrieval relative to the automated warehouse system 1, operations and states of the storage bin 15, the shipping bin 15, the transport robot 16, and the picking station 17. The management is achieved by a controller executing a program stored in a storage. Specifically, these processes are performed in accordance with information processing described in the program. The management server may be implemented, for example, by a physical server installed in the building or the rack or may be implemented, for example, by a cloud server. The management server is capable of communicating with the later-described warehouse system according to the present invention. That is to say, the management server is also capable of managing an operation and a state of the warehouse system according to the present invention.

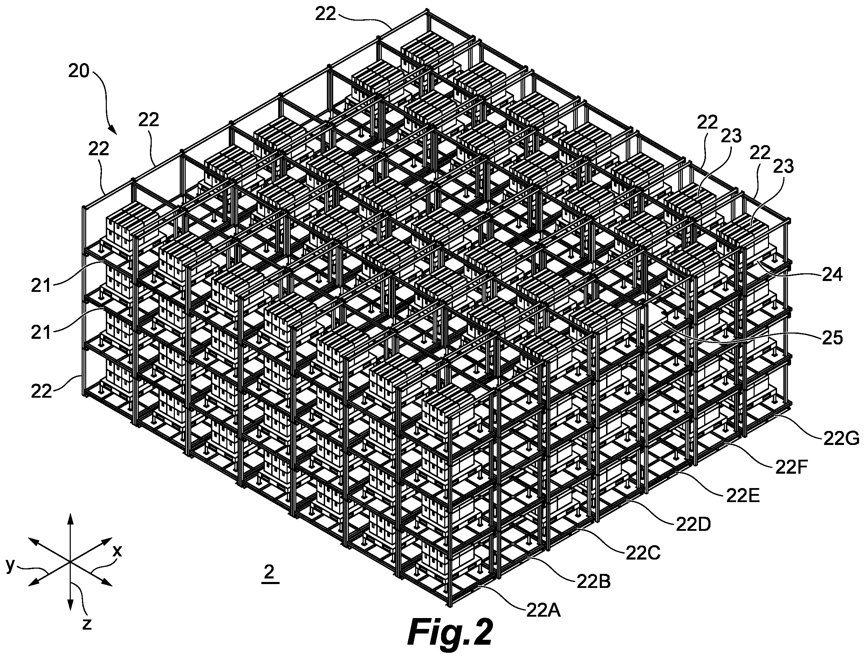

Fig. 2 is a perspective view schematically illustrating a structure of a warehouse system 2 according to an embodiment of the present invention. The warehouse system 2 is a storage shelf for storing items to be picked in the above-described automated warehouse system 1. Specifically, the warehouse system 2 is a storage shelf for storing a large number of the same or different items while they are placed together in a cardboard box or on a pallet. The warehouse system 2 is constructed, for example, on the floor surface within the same building where the automated warehouse system 1 is constructed. The warehouse system 2 includes, for example, a rack 20 disposed, for example, on the floor surface. The rack 20 includes a plurality of floors 21 defining surfaces along the xy-plane. In this example, the rack 20 includes the floors 21 corresponding to four levels. The rack 20 includes a plurality of rack units 22 coupled to one another in the x-axis direction, the y-axis direction, and the z-axis direction. Although being formed in a rectangular shape in plan view in the z-axis direction in this example, the warehouse system 2 may be formed in any other shape such as an L-shape, a U-shape, or an H-shape.

The rack units 22 each define a space in which a pallet 24 for placement of an item 23 is to be placed. In this embodiment, a first row 22A to a seventh row 22G of the rack units 22 extending in the x-axis direction are arranged in the y-axis direction on each of the floors 21. In this example, the space in which the pallet 24 is to be placed is formed in the first row 22A, the third row 22C, the fourth row 22D, the sixth row 22F, and the seventh row 22G. As is apparent from Fig. 2, all four side surfaces of the rack 20 are open so that the pallet 24 in the rack 20 is accessible from an outer periphery, that is, any of the four side surfaces, of the rack 20. In this example, a forklift (not illustrated) is able to load the pallet 24 into the rack 20 from the four side surfaces of the rack 20 or unload the pallet 24 out of the rack 20 from the four side surfaces of the rack 20.

In contrast, the second row 22B and the fifth row 22E are defined as paths through which one or more transport robots 25 that transport the pallet 24 move. The transport robot 25 is an autonomous transport robot capable of autonomously traveling in the rack 20 by understanding a self-location on a map of the rack 20. It should be noted that the transport robot 25 is able to move only on the floor 21 on which the transport robot 25 is located in this example. The transport robot 25 is able to transport the pallet 24 loaded in the rack 20, for example, by the forklift to the rack unit 22 at a predetermined position in the rack 20 through the second row 22B or the fifth row 22E. Likewise, the transport robot 25 is able to transport the pallet 24, which is stored at the predetermined position, to a desired position along a side surface of the rack 20 so that the pallet 24 is unloaded by the forklift. It should be noted that a row forming a space for placing the pallet 24 may be changed as long as the movement of the transport robot 25 is ensured.

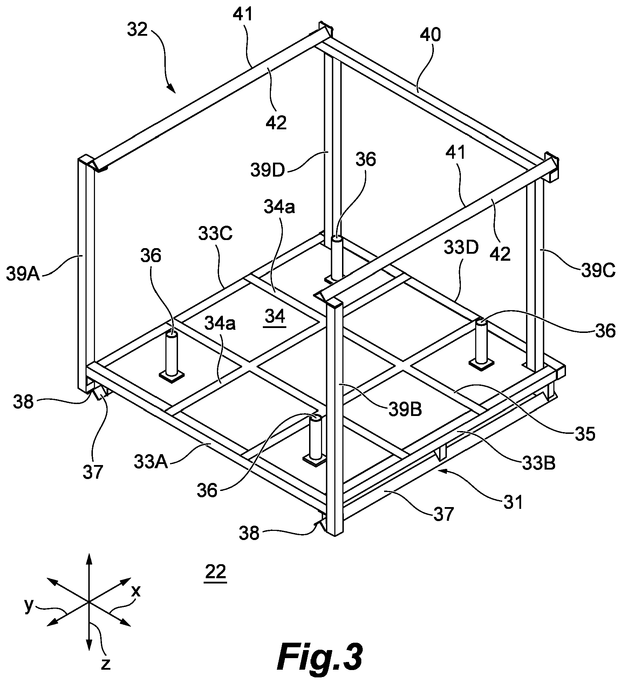

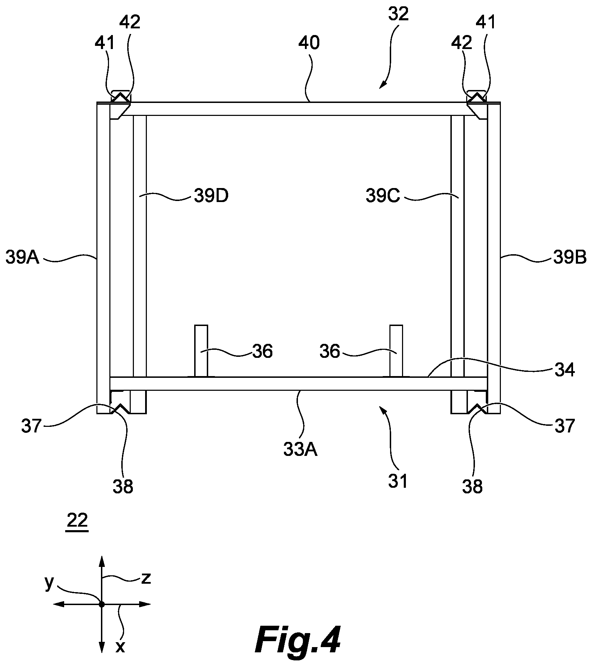

Fig. 3 is a perspective view schematically illustrating a structure of the rack unit 22 according to a specific example. Fig. 4 is a front view schematically illustrating the structure of the rack unit 22 according to a specific example. As illustrated in Fig. 3 and Fig. 4, the rack unit 22 includes a base 31 having a rectangular shape in plan view and a frame 32 joined to the base 31 and defining a space, for example, in the shape of a rectangular parallelepiped. The base 31 has, for example, four frame members 33A to 33D constructed, for example, into a rectangular shape in plan view. The frame member 33 is formed, for example, in a prismatic shape. The frame member 33A is disposed on a front side of the rack unit 22, the frame members 33B, 33C are disposed on lateral sides thereof, and the frame member 33D is disposed on a rear side thereof. The frame member 33A and the frame member 33D extend along the x-axis direction in parallel with each other, whereas the frame member 33B and the frame member 33C extend along the y-axis direction in parallel with each other.

The base 31 includes a panel 35 attached to the frame members 33A to 33D, and the panel 35 defines a flat surface 34 extending along the xy-plane. In this example, the panel 35 is disposed, for example, on the inner side of 33A to 33D. The base 31 further includes, for example, four support legs 36 standing upright from the surface 34. The support legs 36 are formed, for example, in a columnar shape. The support legs 36 are disposed, for example, on a back side the panel 35, penetrating through the panel 35 to be erected from a reinforcing member (not illustrated) joined to the frame members 33A to 33D. The support legs 36 are disposed adjacent to the respective four corners of the rectangular base 31 in plan view. Heights of the support legs 36 from the surface 34 are set to be equal. The support legs 36 are configured to lift and support the pallet 24 above the surface 34 as described later. Accordingly, the arrangement of the support legs 36 may be set in accordance with a size of the pallet 24.

A pair of lines 34a extending in the x-axis direction of the panel 35 and another pair of lines 34 extending in the y-axis direction thereof are drawn on the surface 34 of the panel 35 of each of the rack units 22. In this example, the two pairs of lines 34a are preopercular to each other. The lines 34a extend to the frame members 33A to 33D. The plurality of rack units 22 are arranged adjacent to one another in the x-axis direction and the y-axis direction on each of the floors 21, so that the lines 34a define a pair of x-axis lines extending in the x-axis direction and a pair of y-axis lines extending in the y-axis direction. The x-axis lines and the y-axis lines extend from edge to edge of the rack 20. The lines 34a are colored, for example, white. The transport robot 25 is able to travel on the surface of each of the floors 21 along the x-axis lines and the y-axis lines extending from edge to edge of the floor 21 by virtue of a line tracing function.

The base 31 further includes a pair of supported members 37, 37 attached to a lower side in the z-axis direction of the frame member 33B and the frame member 33C. The pair of supported members 37, 37 extend in parallel with the each other in the y-axis direction. In this example, the supported members 37 extend from a front end to a rear end of the base 31. The supported members 37 are also disposed along a bottom surface of the rack unit 22 as illustrated in Fig. 4. In a front view in Fig. 4, a groove 38 recessed in a triangular shape pointed upward in the z-axis direction is defined in each of the supported members 37. That is to say, the groove 38 is open downward from the bottom surface of the rack unit 22. It should be noted that the frame members 33A to 33D, the support legs 36, and the supported members 37 are made of, for example, a metal material. The frame members 33A to 33D, the support legs 36, and the supported members 37 are joined to one another, for example, by welding.

The frame 32 includes four support columns 39A to 38D erected in the z-axis direction from the four corners of the base 31. The support column 39A and the support column 39B are disposed on the front side of the rack unit 22, whereas the support column 39C and the support column 39D are supposed on the rear side of the rack unit 22. As is apparent from Fig. 4, in this example, the support column 39A and the support column 39B are disposed adjacent to the frame member 33C and the frame member 33B outside in the x-axis direction, respectively. In contrast, the support column 39C and the support column 39D are disposed adjacent to the frame member 33B and the frame member 33C inside in the x-axis direction, respectively, as illustrated in Fig. 3 and Fig. 4. The frame 32 includes a connecting member 40 connecting upper ends of the support column 39C and the support column 39D to each other. The connecting member 40 extends in parallel with the frame member 33D in the y-axis direction. The support columns 39A to 38D and the connecting member 40 are formed, for example, in a prismatic shape.

The frame 32 further includes a pair of support members 41, 41 connecting upper ends of the support column 39A and the support column 39B to upper sides of respective end portions of the connecting member 40. The pair of support members 41, 41 extend in parallel with each other in the y-axis direction. As illustrated in Fig. 4, positions of the support members 41, 41 are aligned with positions of the respective supported members 37, 37 in the x-axis direction. Moreover, in the front view in Fig. 4, the support members 41 each define a support surface 42 protruding in a triangular shape pointed upward in the z-axis direction. In this example, a length in the y-axis direction of the support members 41 is the same as a length in the y-axis direction of the supported members 37. It should be noted that, the upper ends of the support column 39A and the support column 39B are not connected to each other in this example. The support columns 39A to 39D, the connecting member 40, and the support members 41 are made of, for example, a metal material. The support columns 39A to 39D, the connecting member 40, and the support members 41 are joined to one another, for example, by welding.

In this example, the supported members 37 and the support members 41 have the same shape. Specifically, the supported members 37 and the support members 41 are elongated members having an L-shaped cross section in a cross section perpendicular to a longitudinal direction. Such a configuration enables the supported members 37 to be placed over the support members 41. That is to say, the grooves 38 of the supported members 37 are supported by the support surfaces 42 of the support members 41. As described later, the support surfaces 42, 42 of the support members 41, 41 of a single rack unit 22 receive the grooves 38, 38 of the respective supported members 37, 37 of another single rack unit 22, which makes it possible to stack the plurality of rack units 22 in the z-axis direction. For example, in the example illustrated in Fig. 2, four of the rack units 22 are stacked in the z-axis direction.

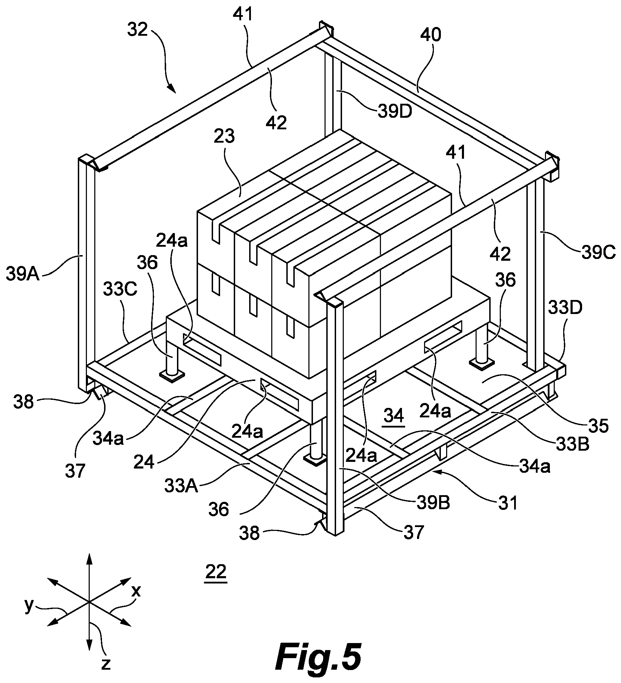

Fig. 5 is a perspective view schematically illustrating the pallet 24 being placed in the rack unit 22 according to a specific example. In each of the rack units 22, the space, for example, in the shape of a rectangular parallelepiped is formed inside the frame 32 as illustrated in Fig. 5. The pallet 24 is accommodated in the space, and the item 23 is placed on the pallet 24. The pallet 24 is supported at a bottom surface thereof by the four support legs 36 while being lifted above the surface 34 of the base 31. The pallet 24 is formed, for example, in the shape of a rectangular flat board. Four side surfaces of the pallet 24 are each provided with a pair of insertion openings 24a for insertion of a folk of the forklift. The pallet 24 is made of, for example, wood, resin material, or metal material. It should be noted that the pallet 24 has a shape and size conforming to a predetermined standard commercially available on the current market.

The item 23 is placed on the pallet 24. In this example, the items 23 are placed on the pallet 24 while being, for example, accommodated in a plurality of cardboard boxes. Moreover, the cardboard boxes are secured to the pallet 24, for example, by winding a band, a film material, or the like thereon so as not to fall off the pallet 24, although the illustration is omitted. The later-described transport robot 25 is able to enter a lower space under the pallet 24 through between the pair of support legs 36, 36 adjacent to each other and lift the pallet 24 up off the support legs 36. The transport robot 25 is able to transport the pallet 24 while lifting the pallet 24. During transport by the transport robot 25, a maximum height in the z-axis direction of the items 23 from the surface 34 of the base 31 is a height at which the connecting member 40 and the support members 41 do not hamper the transport robot 25 from transporting the items 23 and the pallet 24 to the adjacent rack unit 22.

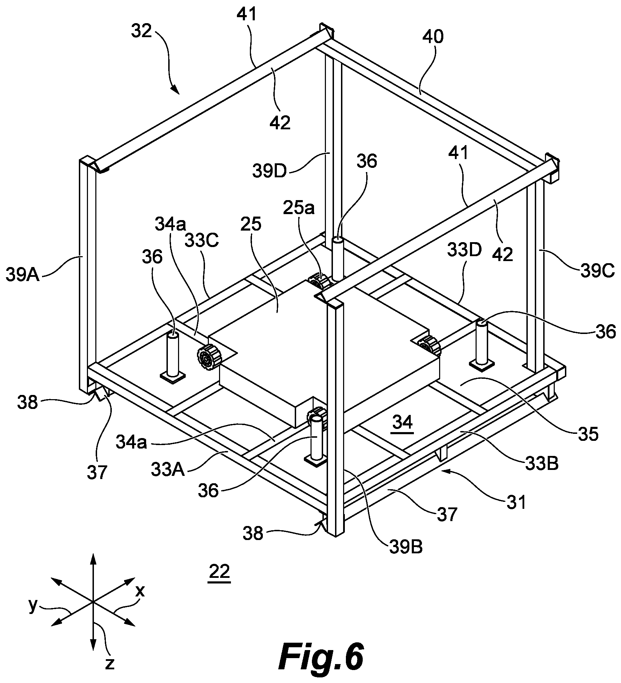

Fig. 6 is a perspective view schematically illustrating the transport robot 25 being placed in the rack unit 22 according to a specific example. The transport robot 25 includes, for example, a plurality of drive wheels 25a. The drive wheels 25a are, for example, Mecanum wheels, so that the transport robot 25 is movable in the x-axis direction and the y-axis direction without changing an orientation thereof. The transport robot 25 is also able to travel on the surface of the floor 21, for example, by the line tracing function as described above. The transport robot 25 has an outline, for example, in a flat cubic shape. An upper surface of the transport robot 25 is defined as being, for example, flat. A height of the upper surface in the z-axis direction of the transport robot 25 is set to be lower than a height of the support legs 36. Moreover, a length of one edge in each of the x-axis direction and the y-axis direction of the transport robot 25 is set to be shorter than a distance between the pair of support legs 36, 36 adjacent to each other. That is to say, the transport robot 25 is able to enter the lower space under the pallet 24. Therefore, the transport robot 25 is movable on the surfaces 34 of all of the rack units 22 irrespective of the presence/absence of the pallet 24.

A height of the transport robot 25 is changeable between a first position and a second position. At the first position, the height of the upper surface of the transport robot 25 is set to a first height. At the second position, the height of the upper surface of the transport robot 25 is set to a second height higher than the first height. The transport robot 25 at the first position is able to enter the lower space under the pallet 24. When the transport robot 25 changes its height from the first position to the second position in the lower space, the transport robot 25 holds, on the upper surface thereof, the bottom surface of the pallet 24. As a result, the pallet 24 is lifted from the support legs 36. At both the first position and the second position, the transport robot 25 is able to travel on the surface 34 of the panel 35 of each of the rack units 22, that is, the floor 21.

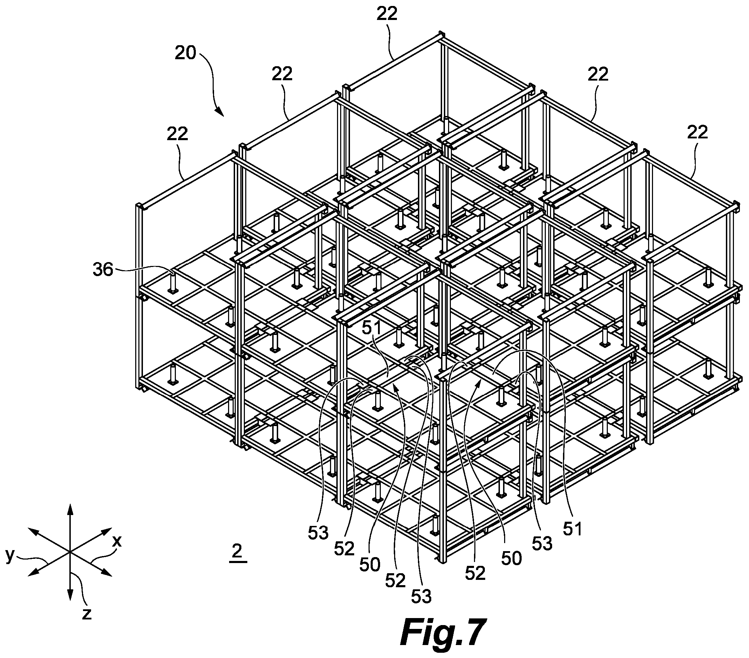

Fig. 7 is an enlarged view of a portion of the rack 20, schematically illustrating a structure of the rack 20. An example illustrated in Fig. 7 is a stacked structure in which the rack units 22 are stacked in two tiers in the z-axis direction and three of the rack units 22 are arranged in each of the x-axis direction and the y-axis direction. In this example, the supported members 37 of the rack unit 22 in the upper tier are supported by the support members 41, 41 of the rack unit 22 in the lower tier. In each of the rack units 22, the support columns 39A and 39B are disposed outside in the x-axis direction with respect to the frame members 33C and 33B, respectively, as described above. Thus, in a case where the support column 39A of one of the rack units 22 arranged in the x-axis direction and the support column 39B of the other rack unit 22 are brought into contact with each other, a gap is formed between the frame member 33C of the one rack unit 22 and the frame member 33B of the other rack unit 22.

In this example, in each row of the rack units 22 arranged in the x-axis direction, a coupling member 50 is disposed in the gap between the rack units 22, 22 adjacent to each other in the x-axis direction on each of the floors 21. The rack units 22, 22 adjacent to each other in the x-axis direction are thus coupled by the coupling member 50. Likewise, in each row of the rack units 22 arranged in the y-axis direction, the coupling member 50 is disposed in the gap between the rack units 22, 22 adjacent to each other in the x-axis direction on each of the floors 21. The rack units 22, 22 adjacent to each other in the y-axis direction are thus coupled by the coupling member 50. As a result, the plurality of rack units 22 are coupled in the x-axis direction, the y-axis direction, and the z-axis direction to construct the rack 20.

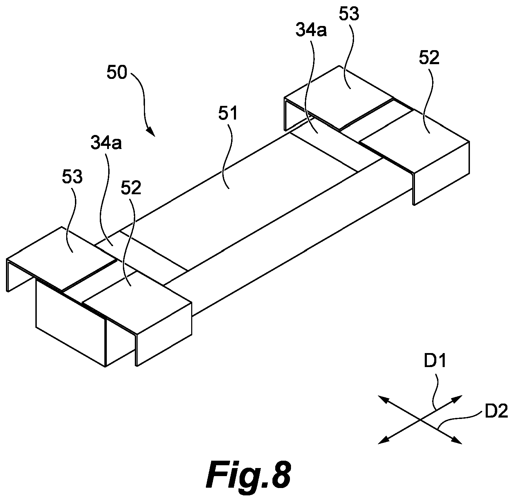

Fig. 8 is a perspective view schematically illustrating a structure of the coupling member 50 according to a specific example. The coupling member 50 includes a main body 51, for example, in the shape of a flat prism elongated in a first direction FD. The coupling member 50 further includes a pair of first engagement members 52, 52 and a pair of second engagement members 53, 53 projecting in the opposite directions to each other from the main body 51 along a second direction D2 perpendicular to the first direction D1. All of the first engagement members 52 and the second engagement members 53 have the same shape. Specifically, the engagement members 52, 53 extend in the second direction D2 along an upper surface of the main body 51 and then extend in parallel with side surfaces of the main body 51. The main body 51, the first engagement members 52, and the second engagement members 53 are made of, for example, a metal material. The first engagement members 52 and the second engagement members 53 are joined, for example, to the main body 51 by welding. It should be noted that the main body 51 is provided with the above-described lines 34a extending in the second direction D2.

Referring to Fig. 6 to Fig. 8 in combination, the rack units 22, 22 adjacent to each other in the x-axis direction are coupled by the coupling member 50. Specifically, when the main body 51 of the coupling member 50 is disposed between the adjacent rack units 22, 22, that is, in the gap between the frame member 33C of one rack unit 22 and the frame member 33B of the other rack unit 22, the first engagement members 52, 52 of the coupling member 50 are engaged with the frame member 33C of the one rack unit 22. Simultaneously, the second engagement members 53, 53 of the coupling member 50 are engaged with the frame member 33B of the other rack unit 22. At this time, it is preferable that the upper surface of the main body 51 of the coupling member 50 be flush or substantially flush with the surfaces 34 of the bases 31 of the rack units 22. The coupling member 50 is thus able to serve as a part of a movement path of the transport robot 25.

Likewise, the rack units 22, 22 adjacent to each other in the y-axis direction are coupled by the coupling member 50. Specifically, when the main body 51 of the coupling member 50 is disposed between the adjacent rack units 22, 22, that is, in the gap between the frame member 33D of one the rack unit 22 and the frame member 33A of the other rack unit 22, the first engagement members 52, 52 of the coupling member 50 are engaged with the frame member 33D of the one rack unit 22. Simultaneously, the second engagement members 53, 53 of the coupling member 50 are engaged with the frame member 33A of the other rack unit 22. At this time, it is preferable that the upper surface of the main body 51 of the coupling member 50 be flush or substantially flush with the surfaces 34 of the bases 31 of the rack units 22. The coupling member 50 is thus able to serve as a part of the movement path of the transport robot 25.

Next, description will be made on loading of the pallet 24 into the rack 20 or unloading of the pallet 24 from the rack 20. For example, a forklift configured to be movable on a floor surface of a warehouse causes a sensor to scan each of the rack units 22 disposed along a lateral side of the rack 20 from an upper end to a lower end thereof to identify the rack unit 22 in which no pallet 24 is accommodated. After that, the forklift loads the pallet 24 to be loaded from a front surface, side surface, or rear surface of the identified rack unit 22 into the space inside the rack unit 22. Likewise, with use of the sensor, the forklift unloads the pallet 24 from the side surface of the rack unit 22 accommodating the pallet 24 to be unloaded. It should be noted that in the rack 20, for example, the pallet 24 on which the item 23 having a high turnover rate is placed may be accommodated in the rack unit 22 in the low tier of the rack 20 to facilitate unloading.

In the warehouse system 2 as described above, it is possible to easily construct the rack 20 by coupling the plurality of rack units 22 to one another, and the plurality of rack units 22 each define the space in which the pallet 24 for placement of the item 23 is to be placed. In the automated warehouse system 1, the storage bin 15 stores an item, which is a minimum unit. This makes it possible to facilitate picking of an item for the purpose of shipment. Meanwhile, in the warehouse system 2, the items 23 are collectively accommodated for example, in a cardboard box, which makes it possible to store the items 23 at a very high density.

Furthermore, for example, a commonly used existing pallet based on a predetermined standard is used as the pallet 24, which makes it possible to facilitate the introduction of the warehouse system 2 into a conventional warehouse. It should be noted that for the inventory management of the items 23 and the transport thereof by the transport robot 25 in the warehouse system 2, a management server of the automated warehouse system 1 may perform management through communication with the automated warehouse system 1.

In the warehouse system 2, a transport mechanism may be incorporated in the rack 20, and the transport mechanism moves the pallet 24 between the plurality of floors 21. The transport mechanism includes a transport elevator, a transport shuttle, or the like. For example, the transport elevator may be disposed on a front surface or a rear surface of the warehouse system 2. The transport elevator enables, for example, the transport robot 25 transporting the item 23 to move between the floors 21. Further, for example, a hydraulic scissor lift may be used in place of the transport elevator or the transport shuttle. For example, the scissor lift may be incorporated in the rack 20 or a movable scissor lift may be disposed outside the rack 20. Moreover, for example, in the rack units 22, 22 stacked in the z-axis direction, the supported members 37 and the support members 41 may be joined to each other by welding or the like. Moreover, the coupling member 50 may be joined to the rack unit 22 by welding or the like. It should be noted that the pallet 24 to be loaded in the warehouse system 2 or the pallet 24 unloaded from the warehouse system 2 may be placed, for example, in a temporary storage space formed on a floor surface around the warehouse system 2 and the automated warehouse system 1. In the temporary storage space, for example, individual items may be taken out of a cardboard box or the like in order to place them in the automated warehouse system 1.

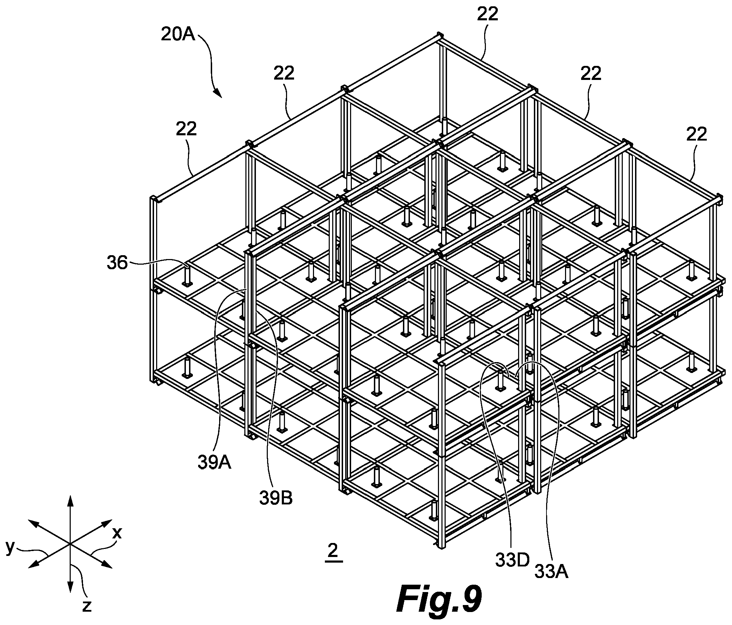

Fig. 9 is an enlarged view of a portion of a rack 20A according to a modification example, schematically illustrating a structure of the rack 20A. In the rack 20A, the placement of the above-described coupling member 50 is omitted. The structure of the rack units 22 is the same and, accordingly, a redundant description is omitted here. In this example, in the rack units 22, 22 arranged in the x-axis direction, the support column 39B of one rack unit 22 and the support column 39A of the other rack unit 22 may be coupled, for example, by welding. In contrast, in the rack units 22, 22 arranged in the y-axis direction, the frame member 33D of one rack unit 22 and the frame member 33A of the other rack unit 22 may be coupled, for example, by welding. In this case, no gap is formed between the rack units 22, 22 adjacent in the y-axis direction. It should be noted that an intervening member (not illustrated) may be disposed in a gap formed between the rack units 22, 22 arranged in the x-axis direction, and the intervening member may enable the movement of the transport robot 25.

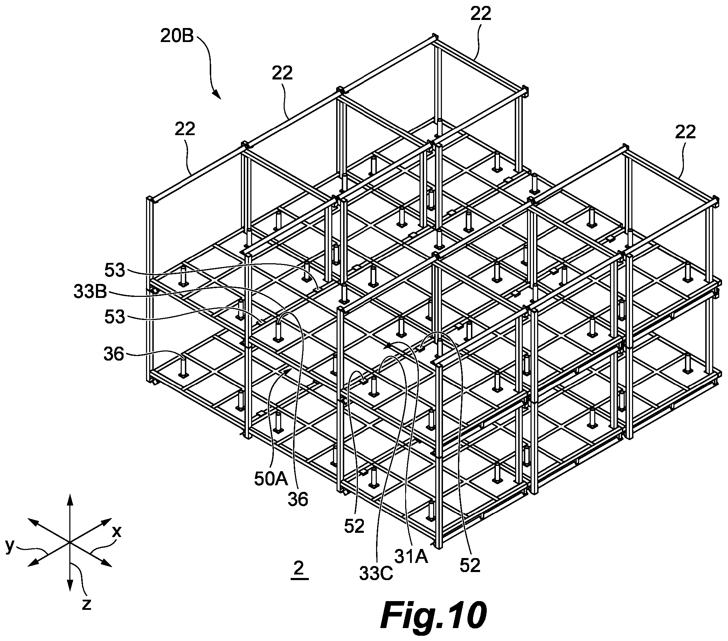

Fig. 10 is an enlarged view of a portion of a rack 20B according to another modification example, schematically illustrating a structure of the rack 20B. In the rack 20B, a plate-shaped coupling member 50A may be disposed, for example, in a row in the y-axis direction in place of the rack unit 22. The coupling member 50A includes a base 31A having a configuration similar to that of the base 31 of the above-described rack unit 22. While the base 31A includes the above-described frame members 33A to 33D, panel 35, and support legs 36, the formation of the supported members 37 is omitted. Further, while the above-described first engagement members 52, 52 are attached to the frame member 33B, the above-described second engagement members 53, 53 are attached to the frame member 33C. While the first engagement members 52 are engaged with the frame member 33C of the adjacent rack unit 22, the second engagement members 53 are engaged with the frame member 33B of the adjacent rack unit 22.

Next, description will be made on how a forklift performing loading or unloading of the pallet 24 with respect to the rack 20 recognizes the rack unit 22. For the recognition, for example, pose estimation software is used. The pose estimation is achieved by, for example, a controller executing the software stored in a storage incorporated in the forklift. The software outputs a list of 3D rectangular-parallelepiped poses from an inputted 3D point cloud. Specifically, a candidate for the rack unit 22 is detected using a slice of a point cloud of a 2D space and then a 3D pose relative to the candidate for the rack unit 22 is calculated. The processing for pose estimation is separated into a) a point cloud preprocessing step and b) a detection step of the rack unit 22 and the 3D pose. Step b) is performed within a specific range (for example, 0.15 m) within a detected height range from a lower end (0.30 m) to an upper end (0.70 m).

In Step a), the inputted 3D point cloud is subjected to filtering. The filtered 3D point cloud is denoted by P3D as described later. Five filters are used for the filtering. Specifically, the five filters are a shadow point filter, an intensity filter, a crop box filter, voxel downsampling, and a radius-based outlier filter. As a result of such a filtering, a sparse and denoised point cloud is produced. For example, the shadow point filter removes a point streaking from a vertical boundary of an object. The intensity filter removes a point having a low intensity. The crop box filter removes a point outside a specified XY-range. Voxel downsampling merges points belonging to the same voxel. The radius-based outlier filter removes a point having no neighboring point. A sliced 3D point cloud (Pradial) is outputted on the basis of the filtered 3D point cloud P3D. The sliced 3D point cloud (Pradial) includes only the nearest point in each radial direction.

Step b) is a main step for pose estimation. In Step b), a pair of candidates for points of right and left front support columns of the rack unit 22 are picked up from the 3D point cloud (Pradial). All pairs are checked and verified. An array of candidates for points of the left support column (PLF) and an array of candidates for points of the right support column (PRF) are sorted in ascending order of a distance from the forklift to the rack unit 22. The distance is a 2D(x-y) distance of a midpoint from the forklift. A distance between the array of candidates for points of the left support column (PLF) and the array of candidates for points of the right support column (PRF) falls between a minimum width and a maximum width of the rack unit 22. After that, a minimum-size 2D rectangle (Rmin) is calculated on the basis of the array of candidates for points of the left support column (PLF) and the array of candidates for points of the right support column (PRF), and a point for a 2D end portion is calculated. Then, the minimum-size 2D rectangle (Rmin) is inputted to a 2D verification process to detect whether or not an area corresponding thereto is an effective area for the rack unit 22.

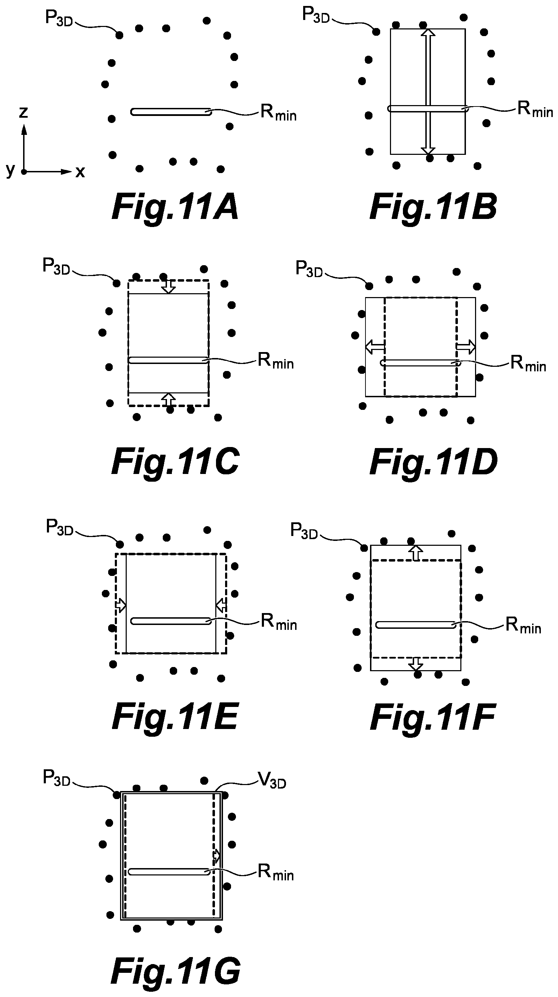

In the 3D calculation step, the end portion of the rack unit 22 is calculated by extending the area from 2D to 3D. Figs. 11A to 11G are diagrams for explaining processing in a 3D calculation step. In Fig. 11A, the obtained minimum-size 2D rectangle Rmin is disposed inside the filtered 3D point cloud P3D. Within the 3D point cloud P3D, the highest point/lowest point in the z-axis direction are detected. The highest point/lowest point are set as the maximum height and the minimum height of the 3D box of the rack unit 22. The 2D rectangle Rmin is extended in the z-axis direction to the highest point/lowest point of the 3D point cloud P3D (Fig. 11B). After that, the 2D rectangle Rmin is shrunk in the z-axis direction in accordance with a predetermined parameter (Fig. 11C). Subsequently, the maximum points/minimum points in the 3D point cloud P3D in the x-axis direction and the y-axis direction are detected. The 2D rectangle Rmin is extended in the x-axis direction and the y-axis direction to the maximum points/minimum points in the 3D point cloud P3D to generate a 3D box (Fig. 11D). After that, the 3D box is shrunk in the x-axis direction and the y-axis direction in accordance with a predetermined parameter (Fig. 11E).

After that, the 3D box is again extended in the z-axis direction to the highest point/lowest point in the 3D point cloud P3D (Fig. 11F). Likewise, the 3D box is again extended in the x-axis direction and the y-axis direction to the maximum points/minimum points in the 3D point cloud P3D (Fig. 11G). In this manner, a final 3D box V3D of the rack unit 22 is generated. After that, verification of the generated final 3D box V3D is performed. Specifically, it is verified whether or not a height of the 3D box V3D falls between the maximum height and the minimum height of the rack unit 22, whether or not the 3D box V3D includes two support column on the opposite sides (optional), whether or not the 3D box V3D includes a frame member on the upper side (optional), and whether or not the 3D box V3D includes a frame member on the lower side (optional). A failure of the verifications indicate that the generated final 3D box V3D is a "false" rack unit. The rack unit 22 is recognized in this manner.

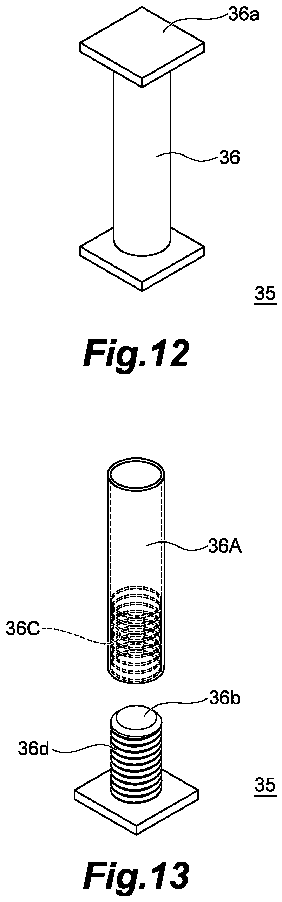

Fig. 12 is an enlarged perspective view schematically illustrating the support leg 36 according to a modification example. In this modification example, a support plate 36a may be attached to an upper end of the support leg 36. The support plate 36a is formed of a flat plate extending in parallel with the surface 34 of the panel 35 in this example. The support plate 36a is formed, for example, in a rectangular shape in plan view. In this example, the support plate 36a is made of, for example, a metal material, and the support plate 36a is attached to the upper end of the support leg 36, for example, by welding. The support plate 36a, which is formed of the flat plate, is able to stably support the bottom surface of the pallet 24. It should be noted that a shape and a size of the support plate 36a may be changed in accordance with the shape and size of the pallet 24, if necessary. The support plate 36a may be formed, for example, in any other polygonal shape, such as a circular shape, a triangular shape, or a pentagonal shape, in plan view.

Fig. 13 is an enlarged perspective view schematically illustrating a support leg 36A according to another modification example. In this modification example, the support leg 36A is configured to be removable with respect to the panel 35. Specifically, the support leg 36A is screwed to an attachment portion 36b erected from the reinforcing member (not illustrated) joined to the frame members 33A to 33D. The support leg 36A is formed, for example, in a cylindrical shape, and a lower end of the support leg 36A has an inner circumferential surface formed with a female thread 36c. In contrast, the attachment portion 36b is formed, for example, in a columnar shape, and an outer circumferential surface of the attachment portion 36b is formed with a male thread 36d. The support leg 36A is attached to the attachment portion 36b by a threaded engagement between the female thread 36c and the male thread 36d. The support leg 36A is thus configured to be removable, which makes it possible to use a plurality of support legs 36 having, for example, different heights. This makes it easy to change a height at which the pallet 24 is supported.

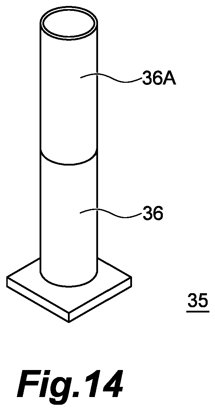

Fig. 14 is an enlarged perspective view schematically illustrating a support leg 36B according to still another modification example. In this modification example, the support leg 36B includes the above-described support leg 36 erected from the reinforcing member (not illustrated) joined to the frame members 33A to 33D and the above-described support leg 36A attached to the upper end of the support leg 36. Although it is not illustrated, the upper end of the support leg 36 is formed with the above-described attachment portion 36b having the outer circumferential surface provided with the male thread 36d. In contrast, the lower end of the support leg 36A has the inner circumferential surface formed with the above-described female thread 36c. With such a support leg 36B, a height of the support leg 36B is easily changeable by replacement of the support leg 36A. It should be noted that the support leg 36 may be replaced with the support leg 36A. Moreover, an upper end of the support leg 36A may be formed with the support plate 36a.

In the above-described rack unit 22, the base 31, which includes the frame members 33A to 33D, the support legs 36, and the supported members 37, the frame 32, which includes the support columns 39A to 39D, the connecting member 40, and the support members 41, and the like are made of a metal material. Thus, it is assumed that static electricity may accumulate in the rack unit 22. In the warehouse system 2 including the rack 20, the rack units 22 are coupled to one another, for example, via the coupling member 50 or 50A, or the like. Moreover, at least a part of the rack units 22 of the rack 20 and a wall beam made of, for example, a metal material may be electrically connected to each other to ground each of the rack units 22 to the wall beam. This makes it possible to reliably discharge static electricity.

Throughout the drawings, the same reference numerals are used to refer to the same or similar components. The following embodiments are not intended to limit the invention recited in the claims. Although the features of the present invention are described herein, various changes and modifications may be made without departing from the spirit and scope of the disclosed embodiments. Further, specific features, structures, or characteristics may be combined in any suitable manner in one or more embodiments. The following detailed description is considered only as illustrative, and the true scope and spirit are intended to be indicated by the claims.

## Claims

1. A warehouse system comprising a rack formed by coupling a plurality of rack units to one another, the plurality of rack units each defining a space in which a pallet for placement of an item is to be placed, wherein
a plurality of floors are formed by the plurality of rack units, the plurality of floors each defining a surface on which a transport robot is movable, the transport robot transporting the pallet between the plurality of rack units.

2. The warehouse system according to claim 1, wherein the plurality of rack units are configured to be coupled to one another in a horizontal direction and/or a vertical direction.

3. The warehouse system according to claim 1, wherein two of the rack units adjacent to each other in a horizontal direction are directly coupled or coupled via a coupling member.

4. The warehouse system according to claim 1, wherein each of the rack units includes a support leg that lifts and supports the pallet above the surface.

5. The warehouse system according to claim 4, wherein the support leg is configured to be removable.

6. The warehouse system according to claim 4, wherein the robot transports the pallet while lifting the pallet from below the pallet.

7. The warehouse system according to claim 1, wherein the pallet is loadable into each of the rack units from an outer periphery of the rack or unloadable out of the rack unit from the outer periphery of the rack.

8. The warehouse system according to claim 7, further comprising a forklift that loads or unloads the pallet.

9. The warehouse system according to claim 8, wherein the forklift recognizes the rack units by pose estimation.

10. The warehouse system according to claim 1, further comprising a transport mechanism that transports the pallet between the plurality of floors.

11. The warehouse system according to claim 1, wherein the warehouse system is communicably connected to another warehouse system that performs picking of the item.
